# EUROPÄISCHE PATENTSCHRIFT

(11) **EP 2 858 053 B1**
(45) Veröffentlichungstag und Bekanntmachung des Hinweises auf die Patenterteilung: **06.05.2020**
(21) Anmeldenummer: 14002726.9
(22) Anmeldetag: 05.08.2014
(51) Int. Cl.: H04L 12/40

(54) **Regelungssystem für Elektrospeicherheizungen, ein Schnittstellengerät hierzu sowie ein Verfahren zur Regelung von Elektrospeicherheizungen**
Control system for electric storage heaters, an interface apparatus for the same and method of regulating electric storage heaters
Système de régulation pour chauffages électriques à accumulation, appareil d'interfaces associé et procédé de régulation de chauffages électriques à accumulation

(30) Priorität: 05.08.2013 DE 102013012906
(43) Veröffentlichungstag der Anmeldung: 08.04.2015
(73) Patentinhaber: Tekmar Regelsysteme GmbH, 45257 Essen (DE)
(72) Erfinder: Fries, Eberhard-Ulrich, 46236 Bottrop (DE)
(74) Vertreter: Grosse Schumacher Knauer von Hirschhausen

(56) Entgegenhaltungen:
- DE-A1- 4 447 559

## Beschreibung

### GEBIET DER ERFINDUNG

Die Erfindung betrifft ein Regelungssystem für Elektrospeicherheizungen, eine Schnittstelle (Interface) oder (besser) ein Schnittstellengerät (ähnlich eines Konverters) hierzu sowie ein Verfahren zur Regelung von Elektrospeicherheizungen gemäß den Oberbegriffen der Ansprüche 1, 6 und 12.

### TECHNOLOGISCHER HINTERGRUND

Eine Elektrospeicherheizung, auch Nachtspeicherheizung genannt, ist eine elektrisch betriebene Heizung, bei der ein wärmespeichender Körper in Schwachlastzeiten (i.d.R nachts) durch verhältnismäßig günstig angebotenen elektrischen Strom ("Nachtstrom") aufgeheizt wird. Die Wärme wird dann vom Speicherkörper verhältnismäßig langsam, etwa über mehrere Stunden, abgegeben. Für eine an das Wetter angepasste Aufladung der Elektrospeicherheizungen sorgt eine von der Außentemperatur abhängige, zentrale Ladesteuerung.

Elektrospeicherheizungen würden zunehmend ab den 1950er und 1960er Jahren als Alternative zu Kohle- und Ölöfen verbaut. Ziel war es, die Kraftwerke auch über Nacht beziehungsweise an schwachen Lastzeiten tagsüber auszulasten. Aufgrund der seinerzeitigen geringen Energiepreise wurde der verhältnismäßig geringe Gesamtwirkungsgrad der Elektrospeicherheizungen in Kauf genommen.

Zwei Bauvarianten von dezentralen Elektrospeicherheizungen herrschen vor. Dies ist einerseits der klassische Speicherofen, welcher hinsichtlich Größe und Installationspositionen vergleichbar mit "klassischen" Heizkörpern ist. Diese meist kastenförmigen Gebilde haben einen elektrisch aufheizbaren Wärmespeicher im Kern (oft aus Magnesit), welcher thermisch isoliert ist. Die Wärme wird ständig sowohl über die Oberfläche (Wärmestrahlung) als auch durch gesteuerte Konvektion in den Raum abgegeben. Hierzu fördert ein Lüfter die Raumluft durch das erhitzte Steinpaket und bläst die aufgewärmte Luft wieder in den Raum hinein.

Das wärmespeichernde Element einer Fußbodenspeicherheizung hingegen ist i.d.R. ein Fußbodenestrich beziehungsweise auch darüber liegende Fliesen. Die Fußbodenspeicherheizung wird ohne gesteuerte Konvektion betrieben, da sie den Raum von sich aus flächig mit nach oben ziehender Warmluft aufwärmen kann. Beide vorherrschenden Heizungsvarianten umfassen neben dem eigentlichen Heizelement und dem Wärmespeicher zusätzlich noch wenigstens einen Fühler zur Messung der Speichertemperatur sowie einen Laderegler. Im Falle von Speicheröfen liegt oft noch ein zusätzlicher Raumtemperaturfühler sowie ein Lüfter vor.

Daneben existieren noch weitere Varianten von Elektrospeicherheizungen, beispielsweise gesetzte Kachelöfen, die oft nur etagen- oder wohnungsweise verbaut wurden und somit halbdezentral arbeiten. Feststoff-Zentralspeicher arbeiten ganz ähnlich wie die dezentralen Speicheröfen, sind jedoch an die Zentralheizung angeschlossen und erwärmen dort, also zentral, über einen Wärmetauscher das Wasser für die "klassischen" Heizkörper.

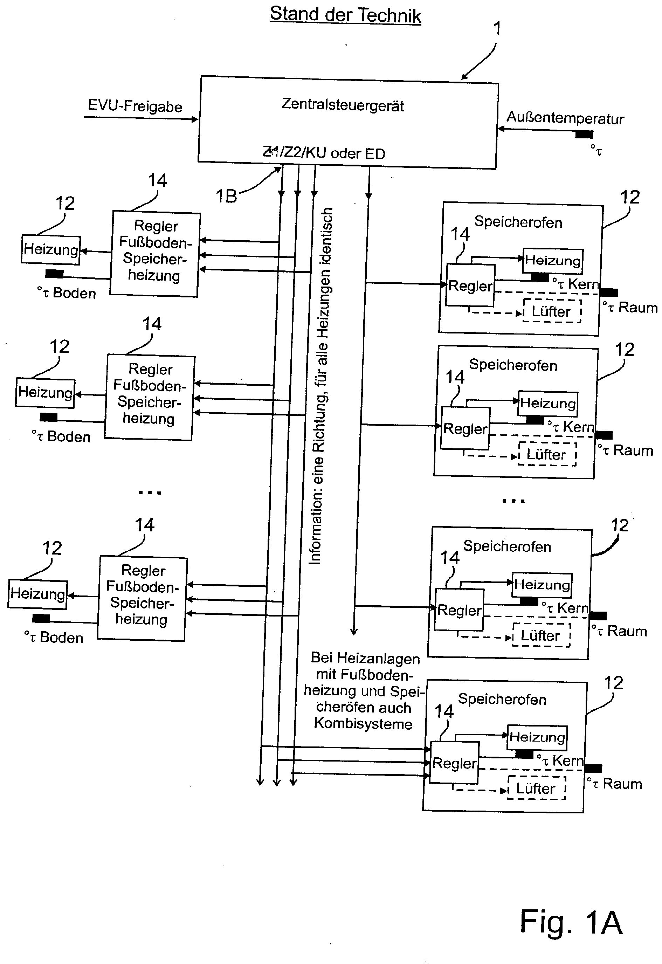

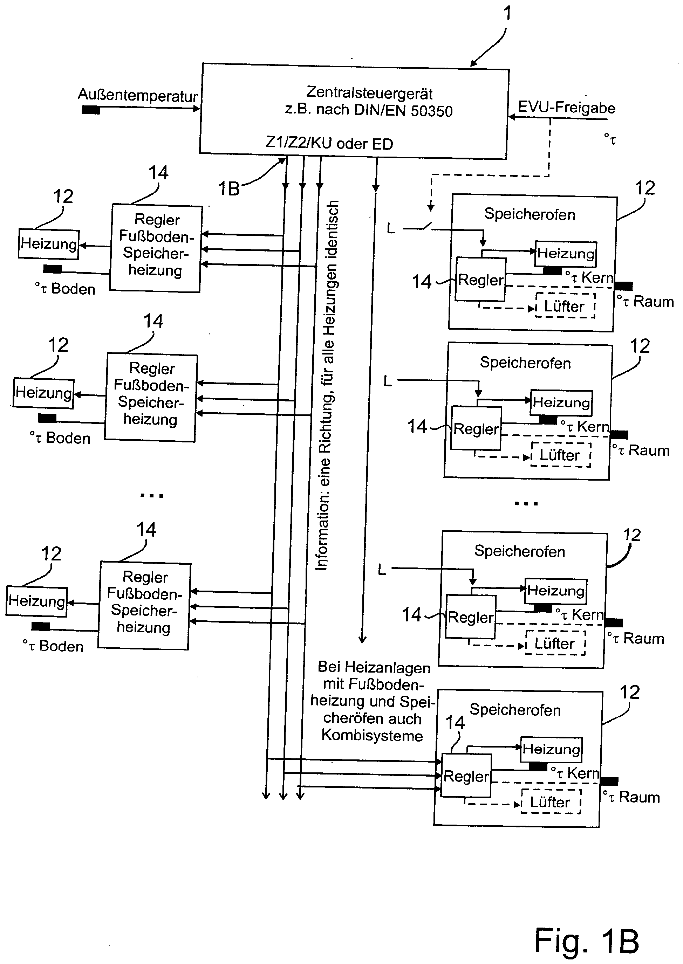

Die Elektrospeicherheizungen der (halb-)dezentralen Systeme nach dem Stand der Technik wurden und werden i.d.R. zentral durch ein Zentralsteuergerät (ZSG) über ein Kabelsystem analog gesteuert, siehe die Varianten nach Fig. 1A/B. Dem ZSG vorgeschaltet ist ein Rundsteuerempfänger, über welchen Informationen des jeweiligen Energieversorgungsunternehmens (EVU) an das ZSG weitergeleitet werden. Dies betrifft v.a. die sogenannte EVU-Freigabe, welche dem ZSG die durchaus wechselnden und von Straßenzug zu Straßenzug bzw. von EVU zu EVU unterschiedlich freigegebenen Niedrigtarifzeiten mitteilt. An das ZSG ist ferner ein Außentemperaturfühler für eine entsprechend witterungsabhängige Steuerung der Heizungen angeschlossen. In sehr alten und kostengünstig ausgeführten Systemen können Elektrospeicherheizungen auch mit nur manuell einstellbaren Ladereglern ausgestattet sein, die die maximale Ladung begrenzen. Sie werden dann über ein sog Ladeschütz, das vom Rundsteuerempfänger angesteuert wird, zu den Freigabezeiten direkt mit geschaltetem Heizstrom versorgt.

Das meist fest verlegte und sich durch viele Räume des Gebäudes ziehende Kabelsystem umfasst i.d.R. dreiadrige Kleinspannungsleitungen (Z1, Z2, KU, bevorzugt bei Fußbodenspeicherheizungen) und/oder eine sogenannte ED-Leitung ("Einschaltdauer", bevorzugt bei Speicheröfen), wie in Fig. 1 ersichtlich. Beide Leitungsvarianten übertragen jeweils einen kodierten, außentemperaturabhängigen Ladegrad-Sollwert an die Laderegler. Die Leitungen der Klemmen Z1 und Z2 übertragen eine Spannungsdifferenz, welche den Ladegrad-Sollwert darstellt. Eine zweite Spannungsdifferenz zwischen den Leitungen der Klemmen KU (Kennlinienumschaltung) und Z1 zeigt an, ob die Laderegler im Tag- oder Nachtbetrieb arbeiten sollen. Die ED-Leitung hingegen überträgt den Ladegrad-Sollwert in Form eines pulsweitenmodulierten Signals an die Laderegler. Bei den o.a. Systemen mit manuellem Laderegler ist keines der beiden Kabelsysteme vorhanden.

Die Laderegler der Elektrospeicherheizungen werden jeweils mit abzweigenden Leitungsabschnitten von Hauptsteuerleitungen des Kabelsystems kontaktiert. Mittels der Temperaturfühler schließlich regeln die Laderegler jeweils auf diesen Sollwert ein. Dem Sollwert zugrunde liegen gemessene Außentemperaturwerte, mit deren Hilfe über Kalibrierungsmaßnahmen vom ZSG ein Ladegrad-Sollwert ermittelt wird.

Elektrospeicherheizungen bedingen, schon allein aufgrund des ihnen zwingend innewohnenden Wärmespeichers, eine träge Steuerung beziehungsweise Regelung. Dies wird zusätzlich durch die Verwendung von Niedrigtarifstrom verschärft, welcher nur in bestimmten Zeitfenstern des Tages zur Verfügung steht. Beides zusammen führt besonders bei Wetterumschwüngen zu unkomfortablen klimatischen Verhältnissen in den Wohnungen, da letzten Endes erst nach Ablauf eines Tages auf das Wetter reagiert werden kann. Es liegt somit eine zeitlich unflexible Steuerung/Regelung vor.

Elektrospeicherheizungssysteme nach dem Stand der Technik werden zentral gesteuert, so dass der entsprechend der Außentemperatur laufend angepasste Sollwert des Ladegrads für alle Elektrospeicherheizungen des Gebäudes Gültigkeit hat. Insofern ist hier ein Kompromiss zwischen kälteren und wärmeren Räumen notwendig, was in begrenztem Umfang durch manuelle Drehregler an der jeweiligen Elektrospeicherheizung zwar ausgeglichen werden kann. Allerdings sind die Temperaturunterschiede zwischen den Räumen von den Jahreszeiten und oft auch auch vom jeweiligen Wetter abhängig (z.B. starker Lichteinfall bei entsprechendem Stand der Sonne), so dass für ein behagliches Raumklima oft eine manuelle Nachjustage erforderlich ist. Aufgrund dieser örtlich unflexiblen Steuerung/Regelung sind oft einige Räume zu kalt und andere zu warm. In letzterem Falle wird oft durch geöffnete Fenster Abhilfe geschaffen und dabei eine Energieverschwendung in beträchtlichem Maße hingenommen.

Aus der DE 44 47 559 A1 ist ein Speichersystem bekannt, bei welchem jedes Speicherheizgerät von einem Microcontroller mit Aktor angesteuert wird.

### DARSTELLUNG DER ERFINDUNG

Der Erfindung liegt die Aufgabe zugrunde, die Nachteile der unflexiblen Steuerung/Regelung von Elektrospeicherheizungen mit geringstmöglichem Aufwand, insbesondere unter Nutzung des bereits verlegten Kabelsystems und der bereits installierten Elektrospeicherheizungen sowie deren Steuerungen, zu mindern. Zur Lösung dieser Aufgabe wird ein Regelungssystem mit den Merkmalen des Anspruchs 1, ein Schnittstellengerät mit den Merkmalen des Anspruchs 6 und ein Verfahren mit den Merkmalen des Anspruchs 12 vorgeschlagen.

Demnach beruht die Erfindung im Kern einerseits auf einem Regelungssystem für Elektrospeicherheizungen, mit einem Zentralsteuergerät und einer Vielzahl von Elektrospeicherheizungen, welche jeweils wenigstens einen analog steuerbaren oder manuellen Laderegler umfassen, wobei den Elektrospeicherheizungen zusätzlich Schnittstellengeräte zugeordnet sind, das Zentralsteuergerät und die Schnittstellengeräte jeweils wenigstens einen digitalen Anschluss (als Ein- und Ausgang) aufweisen, die digitalen Anschlüsse mittels des vorhandenen Kabelsystems oder über Funk miteinander verbindbar sind und die Schnittstellengeräte über analoge Anschlüssee mit den analog steuerbaren Ladereglern oder über die manuellen Laderegler mit den Heizelementen der jeweiligen Elektrospeicherheizung verbindbar oder verbunden sind.

"Steuerung" i.S. der vorliegenden Erfindung meint eine unidirektionale Befehlsübermittlung, auf welche der Befehlsempfänger reagiert. "Regelung" hingegen bedeutet Steuerung mit Rückkopplung, so dass eine geschlossene Befehlsschleife entsteht. Der Oberbegriff ist "Kontrolle".

Der Begriff "Elektrospeicherheizungen" umfasst jedenfalls Fußbodenspeicherheizungen, Speicheröfen und Kachelöfen sowie darüber hinaus generell alle (halb-) dezentralen Heizungen, welche mittels Elektrizität geheizt werden und einen Wärmespeicher aufweisen. Wärmespeicher können, nach entsprechender Wärmeaufnahme, über mehrere Stunden hinweg Wärme wieder abgeben und damit einen Raum aufheizen beziehungsweise auf Raumtemperatur halten.

Der Begriff "Zentralsteuergerät" ist historisch gewachsen und meinte ursprünglich nur eine reine Steuerung. Dem Zentralsteuergerät können jedoch Rückkopplungseingänge hinzugefügt werden, so dass es auch zur Regelung fähig ist. In bestimmten Ausführungsformen der vorliegenden Erfindung ist dies der Fall, wobei hier jedoch zwecks Einheitlichkeit am Begriff "Zentralsteuergerät" festgehalten wird, obwohl es sich im Grunde um ein Zentralregelgerät handelt.

"Zentral" bedeutet hier lediglich, dass dem Zentralsteuergerät eine Vielzahl von Elektrospeicherheizungen zugeordnet werden können. Unter Vielzahl wiederum wird eine Zahl größer als eins verstanden. Keinesfalls ist "zentral" in dem Sinne zu verstehen, dass das Zentralsteuergerät für ein ganzes Gebäude zuständig sein muss. So ist ohne Weiteres auch eine Vielzahl von Zentralsteuergeräten in einem Gebäude denkbar.

"Digitale Signale" sind Signale, welche binär in Informationspaketen kodiert sind. Analoge Steuersignale hingegen sind Signale, welche allgemein nicht einer binären Paketkodierung unterliegen. Darunter fallen insbesondere auch pulsweitenmodulierte Systeme, die zwar oft binär gepulst sind, die aber die Information nicht paketweise, sondern als Zeitdauer übermitteln.

Als "Laderegler" werden Vorrichtungen verstanden, welche den Fluss elektrischer Energie in Reaktion auf Temperaturfühler hin zu Heizelementen der Elektrospeicherheizungen regeln. Dies geschieht mit Blick auf vom Zentralsteuergerät übermittelte Ladegrad-Sollwerte und/oder manuellen lokalen Einstellungen. Dabei entsprechen die gemessenen Temperaturwerte den Istwerten des Ladegrads der Wärmespeicher. Die Laderegler der Elektrospeicherheizungen sind meist in diese integriert (Speicheröfen) oder sitzen in der Elektroverteilung (Fußbodenspeicherheizungen) und sind insofern, wie auch das Kabelsystem, zumeist fest verbaut.

"Schnittstellen(geräte)" oder auch "Interfaces" oder "Konverter" im Sinne der Erfindung sind elektronische Vorrichtungen, welche Informationen vom Zentralsteuergerät an die Elektrospeicherheizungen und insbesondere an deren Laderegler weiterleiten können. Sie weisen wenigstens einen digitalen Anschluss auf, um mit dem wenigstens einen digitalen Anschluss des Zentralsteuergeräts kommunizieren zu können. Damit können Informationen digital übermittelt werden, was die Kommunikationsfähigkeit wesentlich erhöht. Die Schnittstellengeräte weisen ferner wenigstens einen analogen Anschluss oder ein Schaltelement auf, die mit den analog steuerbaren oder den manuellen Ladereglern bzw. Heizelementen verbunden ist bzw. werden kann. Insofern dienen die Schnittstellengeräte als Adapter (Interface) zwischen Zentralsteuergerät und der Elektrospeicherheizung und insbesondere an deren Laderegler. Sie ermöglichen eine digitale Kommunikation zwischen vorhandenen Elektrospeicherheizungen und dem Zentralsteuergerät bei geringstmöglichem Installationsaufwand.

Den Schnittstellengeräten kommt somit die maßgebliche Aufgabe zu, moderne digitale Zentralsteuergeräte an die bereits vorhandenen Elektrospeicherheizungen anschließen zu können. Die Elektrospeicherheizungen enthalten aber meist analog steuerbare oder manuelle Laderegler und benötigen zwecks Anbindung an die digitalen Zentralsteuergeräte jeweils einen Digital-analog-Adapter, hier Schnittstellegerät genannt.

Die Schnittstellengeräte werden einzelnen Elektrospeicherheizungen zugeordnet. Dies eröffnet insbesondere die Möglichkeit der individuellen Kontrolle der Elektrospeicherheizungen durch die Zentralsteuergeräte. Die individuelle Ansprechbarkeit über die Schnittstellengeräte kann beispielsweise mittels Zuweisung individueller digitaler Adressen an die Schnittstellengeräte geschehen. Die individuelle Ansprechbarkeit kann aber auch ohne digitale Adressen geschehen - beispielsweise mittels zeitlicher Kodierung. So ist es denkbar, dass ein erstes zeitliches Signal stets von einem bestimmten ersten Schnittstellegerät empfangen, ein zweites zeitliches Signal stets von einem bestimmten zweiten Schnittstellegerät, usw., empfangen und verarbeitet wird.

"Anschlüsse" im Sinne der Erfindung sind funktionell zu verstehen. Dies können elektrische Kontakte oder aber auch kabellose Sender und/oder Empfänger sein, welche an die Übertragungsstrecke angeschlossen werden können. Dabei bedeutet Anschließbarkeit, dass Signale nicht nur zum entsprechenden Bauteil gelangen können, sondern dort auch weitergeleitet/-verarbeitet werden können.

Die digitalen Anschlüsse können mittels eines Kabelsystems und/oder kabellos verbindbar sein. Unter Kabelsystem wird eine Vielzahl von elektrischen Leitungen verstanden, mittels welcher das Zentralsteuergerät die Befehle an die Elektrospeicherheizungen bzw. an deren Laderegler übermittelt. Das Kabelsystem weist idealerweise eine Architektur auf, welche aus einer (z.B. im Falle einer ED-Leitung) oder mehreren Hauptleitungen (z.B. im Falle von differentiellen Kleinspannungsleitungen) besteht. Von diesen Hauptleitungen zweigen dann Endleitungen an die jeweiligen Elektrospeicherheizungen ab (Baumarchitektur). Denkbar sind jedoch auch nicht abzweigende Leitungen (Sternarchitektur) sowie alle möglichen Mischformen aus Baum- und Sternarchitektur. Ofmals wird das Kabelsystem auch an allen Elektrospeicherheizungen nacheinander entlanggeführt (Ringarchitektur). Unter "kabelloser Übertragung" hingegen sind beispielsweise Funk- oder Infrarot-Übertragungsmöglichkeiten zu verstehen, welche ein Kabelsystem zum Teil oder auch vollständig ersetzen können.

Denkbar ist auch die Nutzung der vorhandenen Spannungsversorgung des Heizsystems über ein so genanntes Powerline-System. Ein Powerline-System ermöglicht digitale Kommunikation über herkömmliche Stromleitungen der Haushalte. So kann, beispielsweise, ein erster Adapter an einer Steckdose die von einem Netzwerkkabel kommenden Daten auf Leitungen des Haushaltsstromnetzes aufmodulieren. Ein zweiter Adapter, etwa innerhalb eines anderen Raumes, kann die auf die Leitungen aufmodulierten Informationen demodulieren und an ein zweites Netzwerkkabel weitergeben. Auf diese Weise werden lange Netzwerkkabel bzw. oft unzureichende Funkverbindungen vermieden.

Vorteilhafterweise umfassen die Schnittstellengeräte Emulatoren zur Erzeugung der analogen Steuersignale. Die Emulatoren können physisch eigenständige Bausteine innerhalb der Schnittstellengeräte sein. Sie können aber auch physische Bestandteile und/oder Programmteile eines größeren Rechnerbausteins sein. Die Emulation kann die Umwandlung digitaler in analoge Werte und/oder umgekehrt umfassen. Die Emulation kann aber auch digitale Werte bzw. Befehle in ganze analoge Wertfolgen (z.B. Pulsweitenmodulation in Form von ED-Signalen) umfassen und/oder umgekehrt.

Wenn die Schnittstellengeräte die Elektrospeicherheizungen identifizierende digitale Adressen aufweisen, können die Elektrospeicherheizungen mittels digitaler Befehle individuell angesprochen werden. Ein solcher digitaler Befehl kann z.B. ein Startbit mit einigen darauf folgenden Adressbits und schließlich eine Reihe an eigentlichen Befehlsbits aufweisen. Das angesprochene Schnittstellegerät würde erst bei den "richtigen" Adressbits die Befehlsbits beachten. Digitale Adressen sind insbesondere für eine örtlich flexiblere Ansteuerung hilfreich. Sie stellen eine etwas komfortablere Möglichkeit der individuellen Ansprechbarkeit als zeitliche Kodierung zur Verfügung, da letztere zumindest weitere Vorrichtungen, wie etwa Befehlszähler, voraussetzen. Digitale Adressen ermöglichen schließlich auch die Kommunikation der Schnittstellengeräte untereinander.

Die digitale Datenübertragung kann zwischen dem Zentralsteuergerät und den Schnittstellengeräten bidirektional sein. Dies ermöglicht eine Rückmeldung der Schnittstellengeräte an das Zentralsteuergerät und damit z.B. eine laufende Überwachung der Schnittstellengeräte. Die Bidirektionalität kann im Falle von ED-Leitungen im Halbduplexbetrieb gewährleistet sein. Im Falle von mehradrigen Kleinspannungsleitungen kann Bidirektionalität im Voll- oder Halbduplexbetrieb ermöglicht werden.

In weiteren vorteilhaften Ausgestaltungen sind heizungsnahe Temperaturfühler und/oder die Raumtemperaturfühler und/oder Ladereglerausgänge und/oder elektrische Bauteile der Elektrospeicherheizungen mit den Schnittstellengeräten verbindbar. Dies führt zu einer im Idealfall das ganze System umfassenden Inkenntnissetzung des Zentralsteuergeräts. In Verbindung mit der Bidirektionalität und der individuellen Ansprechbarkeit ist damit eine zentrale, aber individuelle Regelung aller angeschlossenen Elektrospeicherheizungen möglich. Dies führt sowohl zu Einsparungseffekten als auch zu einem behaglichen Wohnklima.

Wenn das Zentralsteuergerät einen Empfänger, insbesondere für Wettervorhersagen, aufweist, können weitere für die Kontrolle der Elektrospeicherheizungen hilfreiche Informationen verwendet werden. Bei dem Empfänger kann es sich um einen Funkempfänger, aber auch um beliebige andere Empfänger im weiteren Sinne handeln. Der Empfänger kann beispielsweise ein herkömmlicher Internetanschluss o.ä. sein.

Der Empfänger kann neben örtlichen Wetterberichten- und vorhersagen beispielsweise auch Wetterberichte- und vorhersagen aus anderen Regionen empfangen, insbesondere aus Regionen, aus denen das EVU volatile elektrische Energie bezieht. Die örtlichen Wetterberichte präzisieren die Information, die der Außentemperaturfühler an das Zentralsteuergerät weiterleitet. So kann neben einer reinen Temperaturinformation auch die aktuelle Sonnenscheinintensität einen Einfluss auf die Laderegler-Sollwerte haben.

Die Wettervorhersagen aus den Regionen, aus denen das EVU regenerative, volatile Energie bezieht, können ebenfalls zur Berechnung des Ladegrad-Sollwerts herangezogen werden. Ist beispielsweise für den Mittag des nächsten Tages ein starker Wind in der Windkraftregion Nordsee vorhergesagt worden, so ist es zweckmäßig, in der vorangegangenen Nacht die Wärmespeicher entsprechend geringer zu laden, da diese die Wärme nur bis mittags vorhalten müssen. So können die immer noch in Millionenzahl existierenden Elektrospeicherheizungen recht effizient als großer Energiespeicher für die überschüssige elektrische Energie aus regenerativen, volatilen Energiequellen nutzbar sein.

Im Falle von Gebäuden/Liegenschaften mit Anlagen zur Erzeugung regenerativer, volatiler elektrischer Energie (insbesondere Photovoltaikanlagen und Windräder) sind Wettervorhersagen zu Sonnenscheindauer oder Windstärke von besonderer Bedeutung. Diese können in vorausschauender Weise dazu verwendet werden, außerhalb der EVU-Freigabezeiten die von den regenerativen, volatilen Anlagen erzeugte elektrische Energie direkt in die Elektrospeicherheizungen einzuspeisen und so die Elektrospeicherheizungen wenigstens teilweise zu laden. Dies ist insbesondere mit Blick auf die auch zukünftig weiter zurückgehende Einspeisevergütung von Interesse.

In vorteilhaften Ausgestaltungen sind die digitalen Anschlüsse des Zentralsteuergeräts und der Schnittstellengeräte für serielle digitale Datenübertragung und/oder parallele digitale Datenübertragung in Kanälen ausgebildet. Aufgrund einer begrenzten Zahl von Hauptleitungen, i.d.R. maximal drei (Z1, Z2, KU) bzw. eine (ED-Leitung), ist eine räumlich parallele digitale Datenübertragung (also über mehrere physische Leitungen) mit mehr als drei Leitungen meist nicht möglich. Möglich hingegen ist auch die parallele digitale Datenübertragung in Kanälen, welche bestimmten Frequenzbändern zugeordneten sind.

Die Erfindung wird ferner beschrieben durch ein Schnittstellegerät für ein Regelungssystem für Elektrospeicherheizungen, wobei das Regelungssystem ein Zentralsteuergerät und eine Vielzahl von Elektrospeicherheizungen aufweist, und die Elektrospeicherheizungen jeweils wenigstens einen analog steuerbaren oder manuellen Laderegler umfassen, wobei das Schnittstellegeräte einen digitalen Ein- und Ausgang und eine digitale Adresse für Ansprechbarkeit durch das Zentralsteuergerät, eine Kontrolleinheit, sowie wenigstens einen analogen Ausgang oder einen Schaltausgang aufweist und der wenigstens eine analoge Ausgang oder der Schaltausgang mit wenigstens einem der Laderegler verbindbar ist.

In vorteilhaften Ausgestaltungen sind das Schnittstellegerät und das Zentralsteuergerät mit Kleinspannungsleitungen und/oder wenigstens einer ED-Leitung verbindbar. Dies ermöglicht die Nutzung des meist bereits vorhandenen und meist fest verlegten Kabelsystems und damit einen sehr geringen Installationsaufwand. Die Schnittstellengeräte können dabei als reine Kleinspannungsleitungs-Schnittstellengeräte oder als reine ED-Leitungs-Schnittstellengeräte oder als Universal-Schnittstellengeräte mit Anschlüssen für beide Leitungstypen und andere Übertragungswege ausgebildet sein.

Wenn die den Kleinspannungsleitungen zugeordneten digitalen Anschlüsse der Schnittstellegeräte und des Zentralsteuergeräts für serielle Datenübertragung und/oder für parallele Datenübertragung in Kanälen, insbesondere als Leitungstreiber nach den Standards RS422 bzw. RS232 und/oder RS485, ausgebildet sind, kommen weitere Vorteile der Erfindung zum Tragen. Insbesondere die serielle Übertragung und darunter wiederum insbesondere die Standards RS422 bzw. RS232 bzw. RS485 sind besonders verbreitet und ermöglichen einen Rückgriff auf eine große Auswahl elektronischer Bauelemente bei entsprechend geringen Stücckosten.

Vorteilhafterweise sind die den Kleinspannungsleitungen zugeordneten digitalen Anschlüsse über eine USART-Einheit mit der Kontrolleinheit des Schnittstellegerätes verbindbar. USART-Einheiten können physisch eigenständig, aber auch physisch in einer höherintegrierten Einheit, z.B. einem Mikrocontroller, eingebunden sein. USART-Einheiten ermöglichen synchrone und asynchrone Datenübertragung (mit bzw. ohne Taktgeber). USART-Einheiten sind daher einerseits vielseitig verwendbar und andererseits weit verbreitet, so dass sich auch hier geringe Stückkosten ergeben können.

Wenn die den Kleinspannungsleitungen zugeordneten analogen Anschlüsse der Schnittstellengeräte mit wenigstens einem D/A-Wandler verbindbar sind, können digitale in analoge Spannungswerte umgewandelt und so den analog steuerbaren Ladereglern zur Verfügung gestellt werden. Im Falle von zwei D/A-Wandlern ist die Schnittstelle auf den häufigen Fall der drei Kleinspannungsleitungen zugeschnitten. Die Leitung Z2 (wie später noch aus der Zeichnung ersichtlich) dient hierbei als analoger, differentieller Referenzwert für die Leitungen Z1 und KU. Demzufolge gibt einer der beiden D/A-Wandler den Wert Z1, der andere den Wert KU aus. Beide analogen Spannungswerte werden per Spannungsdifferenz auf eine dritte, gemeinsame Leitung bezogen.

Vorzugsweise sind die der wenigstens einen ED-Leitung zugeordneten digitalen Anschlüsse des Schnittstellegerätes und des Zentralsteuergeräts für die synchrone Datenübertragung ausgebildet. Hier wird besonders vorzugsweise eine mit der Netzfrequenz zusammenhängenden Taktung, ganz besonders vorzugsweise eine Taktung von 100Bit/s, gewählt. Dies hängt damit zusammen, dass aus der Netzspannungsfrequenz der ED-Leitung der Takt zur synchronen Datenübertragung gewonnen werden kann, was die Kommunikation zwischen den elektronischen Einheiten vereinfachen kann. Besonders in Frage kommende Frequenzen sind ganze Vielfache der Netzfrequenz bzw. Teilfrequenzen wie 10Bit/s oder 25Bit/s.

Wenn die der ED-Leitung zugeordneten digitalen und/oder analogen Anschlüsse des Schnittstellegerätes jeweils wenigstens einen Triac, vorzugsweise mindestens einen Opto-Triac zur Steuerung der elektrischen Energie aufweisen, stehen der Schnittstelle leistungselektronische Bauelemente zur Verfügung. Bei Verwendung von Opto-Triacs erfolgt eine galvanische Entkopplung zum Netz und es wird die Störsicherheit gesteigert. In vorteilhaften Ausgestaltungen weisen die der ED-Leitung zugeordneten digitalen Anschlüsse des Schnittstellegerätes Optokoppler zur galvanisch getrennten Taktgenerierung und/oder zur galvanisch getrennten Signalweiterleitung auf. Dies steigert so die Störsicherheit.

Die Erfindung wird schließlich dargestellt durch ein Verfahren zur Regelung von Elektrospeicherheizungen mit einem Zentralsteuergerät und einer Vielzahl von Elektrospeicherheizungen, wobei die Elektrospeicherheizungen jeweils wenigstens einen Laderegler umfassen, wobei den Elektrospeicherheizungen Schnittstellengeräte zugeordnet werden und die Laderegler mittels der Schnittstellengeräte mit wenigstens einem digitalen Anschluss des Zentralsteuergeräts verbunden werden.

Wenn das Zentralsteuergerät die Daten ausgibt und/oder verarbeitet und/oder in Reaktionen auf die Daten der Schnittstellengeräte Befehle an die Schnittstellengeräte sendet, dann kann ein zweiter, das ganze System überspannende Regelkreis entstehen. Dem Anwender wird so die Möglichkeit einer umfassenden, zentralen und flexiblen Kontrolle an die Hand gegeben. Insbesondere kann das Zentralsteuergerät den Ladegrad der jeweiligen Elektrospeicherheizungen über die Laderegler und über die Schnittstellengeräte individuell und/oder in Gruppen und/oder gemeinschaftlich regeln. Das Zentralsteuergerät kann aber auch Informationen über alle an die Schnittstellengeräte angeschlossenen Vorrichtungen einholen und so beispielsweise den Nutzer bezüglich etwaiger defekter Bauteile warnen. Schließlich könnten die Schnittstellengeräte und Elektrospeicherheizungen auch bei Bedarf über das Zentralsteuergerät ausgeschaltet werden.

Es kann eine Funkverbindung für die digitale Datenübertragung genutzt werden. Hierbei kommunizieren das Zentralsteuergerät und die Schnittstellengeräte miteinander über Funk anstelle über Kabel. Dies eröffnet zunächst den Vorteil, dass bei der Installation im Falle eines defekten Kabelbaums auf eine Kabelneuverlegung u.U. vollständig verzichtet werden kann.

Vorteilhafterweise werden mittels Temperaturfühlern in oder in der Nähe der Wärmespeicher Ist-Ladegrade der jeweiligen Elektrospeicherheizungen, insbesondere über automatisch ermittelte Temperatur-Ladegrad-Kurven, ermittelt. Dabei korrespondieren die Temperaturwerte mit den von den Wärmespeichern aufgenommenen Wärmemengen. Über eine Verknüpfung dieser Temperaturwerte mit dem Schaltzustand der Heizung, insbesondere der Einschaltdauer, kann automatisch der Zusammenhang zwischen gemessener Temperatur und Ladegrad des Speichers ermittelt werden. Anhand dieser Kurven können die Ist-Ladegrade entsprechend genauer abgeschätzt werden.

Werden mit Hilfe von separaten Temperaturfühlern die Raumtemperaturen ermittelt, so werden die Raumtemperaturen genauer erfasst als durch die in oder in der Nähe der Wärmespeicher positionierten Fühler, da letztgenannte erheblich von der Eigenerwärmung des Speicherofen beeinflusst werden.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen, sowie aus der nachfolgenden Beschreibung der zugehörigen Zeichnung und Tabelle, in der - beispielhaft - ein Ausführungsbeispiel eines Regelungssystems für Elektrospeicherheizungen dargestellt ist.

### DARSTELLUNG EINES AUSFÜHRUNGSBEISPIELS

Figur 2A/B zeigt ein Blockschaltbild eines erfindungsgemäßen Elektrospeicherheizungssystems in zwei Ausführungsvarianten;
Figur 3A/B zeigt ein Blockschaltbild eines Schnittstellengerätes eines erfindungsgemäßen Elektrospeicherheizungssystems in zwei Ausführungsvarianten.

Der Stand der Technik hinsichtlich Elektrospeicherheizungssysteme ist in Figuren 1A/B abgebildet, weswegen diesbezüglich auf den bereits beschriebenen technologischen Hintergrund verwiesen wird.

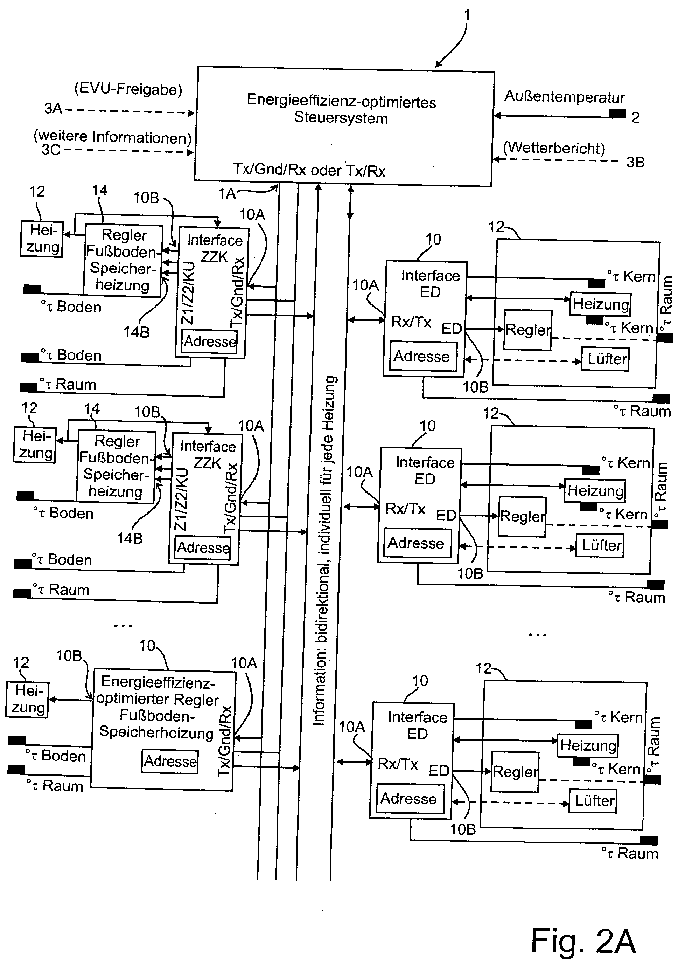

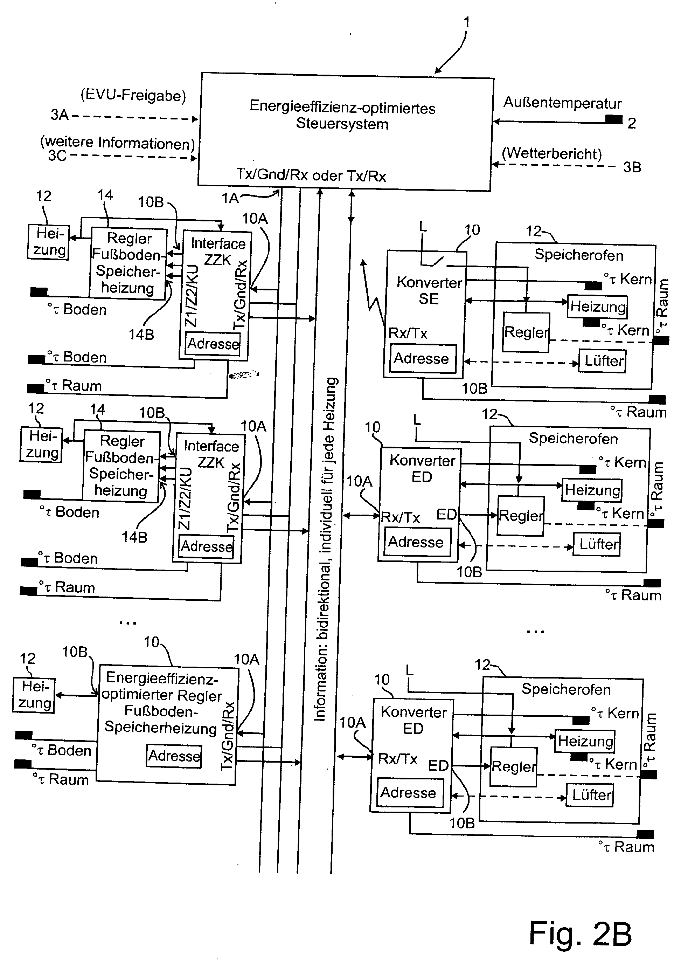

In Figur 2A/B sind zwei Varianten eines Ausführungsbeispiels eines erfindungsgemäßen Regelungssystems dargestellt. Ein ZSG 1 weist neben einem Außentemperaturfühler 2 noch einen Empfänger oder dergl. auf, welcher nicht nur EVU-Freigabesignale 3A, sondern gewünschtenfalls zusätzlich auch Wetterberichte 3B und weitere Informationen 3C, wie etwa Wettervorhersagen und Mobilfunk-Steuersignale, empfangen kann. Das ZSG weist zwecks größtmöglicher Kompatibilität mehrere Anschlüsse für Kleinspannungs- und ED-Leitungen auf. Der meist einadrige ED-Anschluss kann nur wechselseitig senden und empfangen (Tx und Rx), läuft also im Halbduplexbetrieb. Alternativ verwendbare Kleinspannungsleitungen hingegen können auch im Voll-Duplexbetrieb genutzt werden mit den entsprechenden Vorteilen der Geschwindigkeit bzw. Störsicherheit.

Aufgrund der regelungstechnischen Trägheit der Elektrospeicherheizungssysteme ist eine informationstechnische Vernetzung der ZSG von großem Vorteil. Besonders örtliche und überörtliche Wettervorhersagen werden vom ZSG zur zeitlich und örtlich flexiblen Ladegrad-Sollwert-Berechnung verwendet. Örtliche Wettervorhersagen, darunter z.B. Vorhersagen zur Sonnenscheindauer und Windstärke, dienen zur individuellen Regelung der einzelnen Elektrospeicherheizungen des Gebäudes. Besonders Räume mit großen, südseitig ausgerichteten Fenstern benötigen in der vorhergehenden Nacht einen geringeren Ladegrad. Ist eine Photovoltaikanlage am Gebäude installiert oder dieses an ein Windrad angeschlossen, so kann u.U. in der vorhergehenden Nacht gänzlich auf eine Aufladung der Wärmespeicher verzichtet werden. Überörtliche Wettervorhersagen sind für die effiziente Speicherung von Energieüberschüssen des jeweiligen EVU von großer, auch finanzieller, Bedeutung für die Inhaber und Nutzer von Elektrospeicherheizungssystemen.

An die Kleinspannungs- bzw. ED-Leitungsenden können Schnittstellengeräte 10 dort, wo die Leitungsenden der entsprechenden Elektrospeicherheizungen 12 ohne großen Aufwand zugänglich sind, installiert werden. Dies ist in vielen Fällen direkt an oder in der Elektrospeicherheizung selber. Diese räumliche Zuordnung der Schnittstellengeräte zu den Elektrospeicherheizungen (gleicher Endleitungsabschnitt) gewährleistet die individuelle Ansprechbarkeit der Elektrospeicherheizungen durch das ZSG.

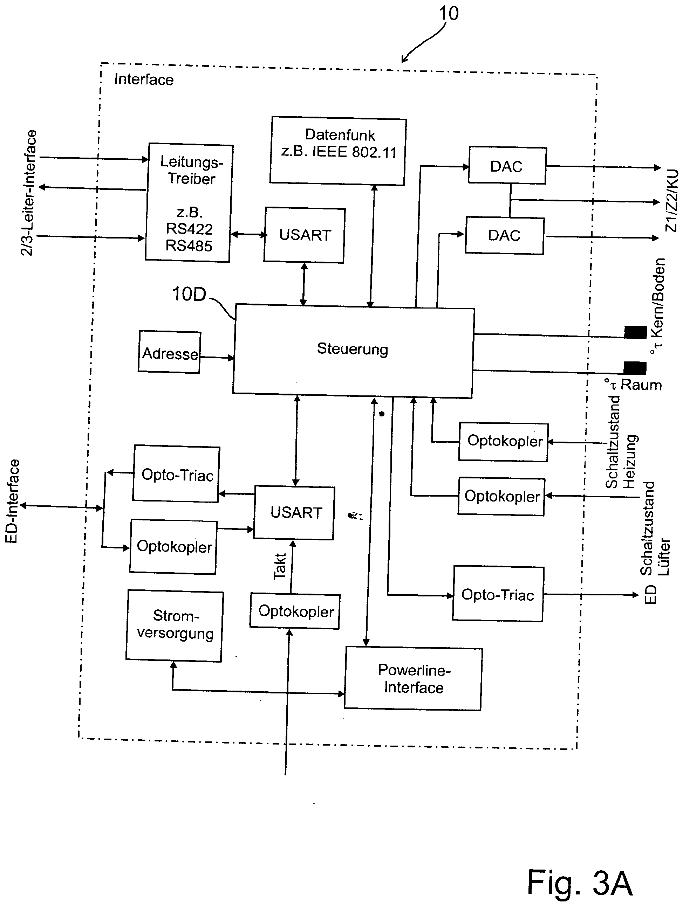

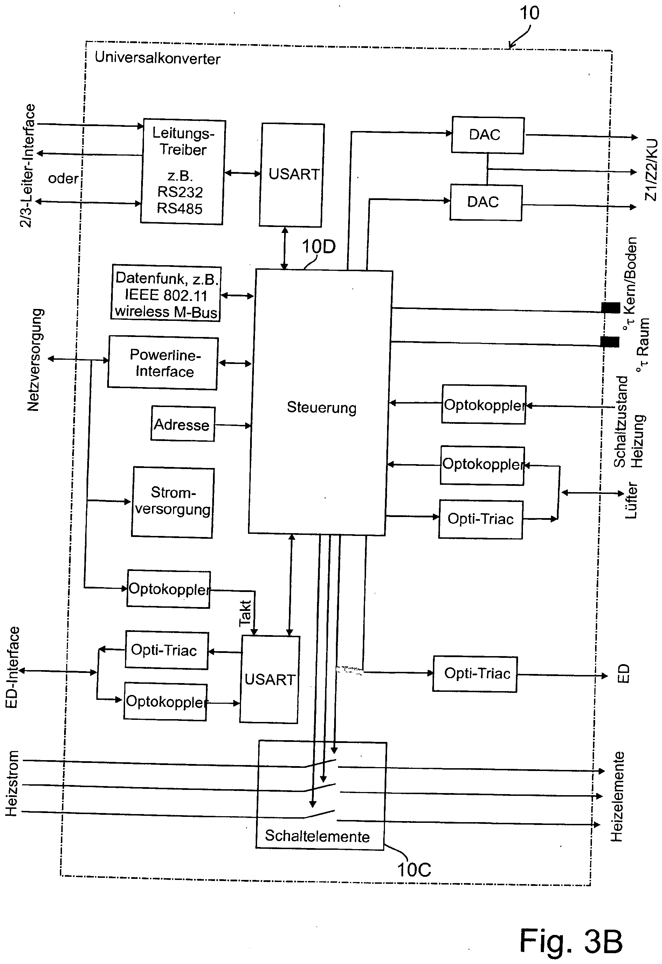

Die Schnittstellengeräte sind entweder als Universalschnittstellengerät (in Fig. 3A als "Interface" und in Figur 3B als "Universalkonverter" bezeichnet), also mit Kleinspannungs- und ED-Leitungsanschlüssen sowie weiteren Übertragungseinrichtungen, oder spezifisch auf Kleinspannungs- bzw. ED-Leitungen ausgelegt. Die spezifisch ausgelegten Schnittstellengeräte hingegen bieten den Vorteil der etwas geringeren Stückkosten, was insbesondere bei großen Elektrospeicherheizungssystemen mit bekanntem Leitungstyp von Vorteil ist. Das etwas teurere Universalschnittstellengerät hat bei Objekten mit eher kleinen Elektrospeicherheizungssystemen mit unbekanntem Leitungstyp ihre Vorteile und kann u.U. Arbeitsaufwand des Installateurs einsparen.

Digitale Adressen sind den Schnittstellengeräten zugewiesen. In Verbindung mit der räumlichen Zuordnung der Schnittstellengeräte zu den Elektrospeicherheizungen ist so eine individuelle Ansprechbarkeit der Elektrospeicherheizungen gewährleistet. Die Schnittstellengeräte weisen ferner Anschlüsse für heizungsnahe Temperaturfühler und Raumtemperaturfühler sowie für Lüfter von Speicheröfen auf. Diese Daten können an das ZSG zwecks Erfassung eines umfassenden Systemstatus sowie zwecks weitergehender Regelung weitergeleitet werden. Insbesondere können so die Ladegrad-Sollwerte an die jeweils gewünschte Raumtemperatur angepasst und an die Schnittstellengeräte und Laderegler gesandt werden. Der umfassende Systemstatus kann in einer App dargestellt werden und mittels des Mobiltelefons und des ZSG-Empfängers nach Nutzerwunsch, entsprechend zeitversetzt, abgeändert werden.

Die Schnittstellengeräte können sowohl an Fußbodenspeicherheizungen wie auch an Speicheröfen angeschlossen werden. Hierzu sind neben digitalen (10A) und analogen (10B) Anschlüssen für das ED-System auch solche für das Z1/Z2/KU-System sowie zwei Temperaturfühleranschlüsse (Boden- bzw. Raumtemperaturfühler) und ein Lüfteranschluss vorgesehen. Damit sind die Schnittstellengeräte sowohl für Fußbodenspeicherheizungen als auch für Speicheröfen einsetzbar.

In Figur 3A/B sind zwei Varianten eines Universalschnittstellengerätes (in Fig. 3A als "Interface" und in Figur 3B als "Universalkonverter" bezeichnet), abgebildet. Dessen den Kleinspannungsleitungen zugeordneten, digitale Anschlüsse weisen Leitungstreiber für den RS422 bzw. RS232- bzw. RS485-Standard auf. Der Leitungstreiber ist über eine USART-Einheit mit einer Steuerung (Kontrolleinheit) verbunden. Die Steuerung wandelt die digitalen Befehle per Emulation in digitale Spannungswerte um, welche von D/A-Wandlern schließlich in die analogen Spannungswerte Z1, Z2 und KU übersetzt und an den Laderegler weitergeleitet werden.

Der der ED-Leitung zugeordnete, digitale Anschluss verarbeitet über einen ersten Optokoppler die vom ZSG kommenden Daten, wobei mit einem zweiten Optokoppler aus der Netzfrequenz ein 100Bit/s-Takt für die synchrone Datenübertragung generiert wird. Beide Optokoppler sind mit einem zweiten USART verbunden, der die Daten an die Steuerung weiterleitet. Die Steuerung wandelt die digitalen Befehle per Emulation in ED-Werte um, welche an dem analogen ED-Anschluss über einen Opto-Triac in Form eines herkömmlichen ED-Signals (PWM-Codierung) an den oder die Laderegler weitergegeben werden. Zur Übertragung von Daten an das ZSG ist die zweite USART-Einheit ausgangsseitig mit einem zweiten Opto-Triac verbunden.

Für Einsatzfälle, bei denen kein Kabelsystem vorhanden oder das vorhandene gestört ist, kann zur Kommunikation zwischen Schnittstellengerät und ZSG ein Powerline-Interface oder ein Funk-Interface, z.B. nach den Normen IEEE 802.11 oder wireless M-Bus, eingebaut sein.

Elektrospeicheröfen mit einem nur manuellen Regler werden mit ihrer Energieversorgung an ein Schaltelement angeschlossen, wodurch die Heizelemente (mit Energieführung über den manuellen Regler) direkt geschaltet werden können. Durch Ein- und Ausschalten der gesamten Netzversorgung der Elektrospeicherheizung kann so der Ladegrad geregelt werden. Vorzugsweise ist das Schaltelement wegen der Versorgung der Elektrospeicherheizung mit Drehstrom als dreifaches Relais oder Triac ausgeführt. Zur feineren Einstellung der Heizleistung kann in dieser Ausführung jede Phase des Drehstroms einzeln einschaltbar sein.

Der Steuerung kann ferner eine individuelle digitale Adresse zugeordnet sein, über die das Schnittstellegerät individuell vom Zentralsteuergerät angesprochen werden kann. Die Temperaturfühler schließlich sind direkt mit der Steuerung verbunden. Weiterhin sind zwei Optokoppler vorhanden, die über die Abfrage der Netzspannung die Schaltzustände der Heizung und des gegebenfalls vorhandenen Lüfters feststellen können sowie ein weiterer Opto-Triac, über den der Lüfter direkt angesteuert werden kann.

Die gemessenen Temperaturen und Schaltzustände werden von der Steuerung über die USARTs und die Leitungstreiber bzw. den zweiten Triac an das Zentralsteuergerät zurückgemeldet.

Ein solches Universalschnittstellengerät kann erfindungsgemäß auch spezifisch für Kleinspannungsleitungen oder ED-Leitungen sowie andere Übertragungswege ausgelegt sein.

Insbesondere umfasst die Erfindung ein Regelungssystem für Elektrospeicherheizungen, mit einem Zentralsteuergerät (1) und einer Vielzahl von Elektrospeicherheizungen (12), wobei die Elektrospeicherheizungen jeweils wenigstens einen analog steuerbaren (14) oder einem manuellen Laderegler umfassen, bei dem den Elektrospeicherheizungen (12) zusätzlich Schnittstellengeräte (10) zugeordnet sind, das Zentralsteuergerät (1) und die Schnittstellengeräte (10) jeweils wenigstens einen digitalen Anschluss (1A, 10A) aufweisen, die digitalen Anschlüsse (1A, 10A) miteinander verbunden oder verbindbar sind und die Schnittstellengeräte (10) über mindestens je einen analoge Anschluss (10B) mit den analog (14B) steuerbaren Ladereglern (14) verbunden oder verbindbar sind und/oder über Schalteinrichtungen (10C) mit manuellen Ladereglern und darüber mit den Heizelementen der jeweiligen Elektrospeicherheizung (12) verbunden oder verbindbar sind, insbesondere wenn die digitalen Anschlüsse mittels eines Kabelsystems und/oder kabellos verbindbar sind und/oder insbesondere wenn die Schnittstellengeräte Emulatoren zur Erzeugung der analogen Steuersignale umfassen und/oder insbesondere wenn die Schnittstellengeräte über mindestens ein, vorzugsweise drei Schaltelemente (10C) zum Ein- und Ausschalten der Heizelemente der jeweiligen Elektrospeicherheizung (12) verfügen und/oder insbesondere wenn die mehreren Schaltelemente nach Anspruch 3a auch einzeln schaltbar sind, um so eine feiner gestufte Leistungsaufnahme zu ermöglichen und/oder insbesondere wenn die Schnittstellengeräte die Elektrospeicherheizungen identifizierende digitale Adressen aufweisen und/oder insbesondere wenn die Datenübertragung zwischen dem Zentralsteuergerät und den Schnittstellengeräten bidirektional ist und/oder insbesondere wenn heizungsnahe Temperaturfühler und/oder Raumtemperaturfühler und/oder Ladereglerausgänge und/oder elektrische Bauteile der Elektrospeicherheizungen mit den Schnittstellengeräten verbindbar sind und/oder insbesondere wenn das Zentralsteuergerät einen Empfänger, insbesondere für Wettervorhersagen, aufweist und/oder insbesondere wenn die digitalen Anschlüsse des Zentralsteuergeräts und der Schnittstellengeräte für serielle digitale Datenübertragung und/oder parallele digitale Datenübertragung in Kanälen ausgebildet sind.

Insbesondere umfasst die Erfindung ferner ein Schnittstellengerät für ein Regelungssystem für Elektrospeicherheizungen, insbesondere mit einem Regelungssystem wie vorbezeichnet, wobei das Regelungssystem ein Zentralsteuergerät (1) und eine Vielzahl von Elektrospeicherheizungen (12) aufweist, wobei die Elektrospeicherheizungen jeweils wenigstens einen analog steuerbaren oder mindestens einen manuellen Laderegler (14) umfassen, bei dem das Schnittstellegerät (10) einen digitalen Anschluss (10A) als Ein- und Ausgang und eine digitale Adresse für Ansprechbarkeit durch das Zentralsteuergerät (1), eine Kontrolleinheit, wie eine Steuerung (10D), sowie wenigstens einen analogen Anschluss (10B) als Ausgang und/oder Schalteinrichtung (10C) aufweist und der wenigstens eine analoge Ausgang (10B) mit wenigstens einem der Laderegler (14) verbindbar ist und/oder die Schalteinrichtung mit dem manuellen Laderegler und darüber mit den Heizelementen der jeweiligen Elektrospeicherheizung (12) verbunden oder verbindbar ist, insbesondere wenn die digitalen Anschlüsse mittels eines Kabelsystems und/oder kabellos verbindbar sindund/oder insbesondere wenn das Schnittstellengerät und das Zentralsteuergerät mit Kleinspannungsleitungen und/oder wenigstens einer ED-Leitung und/oder mittels Powerline und/oder Funksignalen verbindbar sind und/oder insbesondere wenn die den Kleinspannungsleitungen zugeordneten digitalen Anschlüsse des Schnittstellengerätes und des Zentralsteuergeräts für serielle Datenübertragung und/oder für parallele Datenübertragung in Kanälen, insbesondere als Leitungstreiber nach den Standards RS422, RS232 und/oder RS485, ausgebildet sind und/oder insbesondere wenn die den Kleinspannungsleitungen zugeordneten digitalen Anschlüsse über eine USART-Einheit mit der Kontrolleinheit des Schnittstellengerätesverbindbar sind und/oder insbesondere wenn die den Kleinspannungsleitungen zum Elektrospeicherheizungsregler zugeordneten analogen Anschlüsse des Schnittstellengerätes mit wenigstens einem D/A-Wandler und vorzugsweise mit zwei D/A-Wandlern verbindbar sind und/oder insbesondere wenn die der wenigstens einen ED-Leitung zugeordneten digitalen Anschlüsse des Schnittstellengerätes und des Zentralsteuergeräts für die synchrone Datenübertragung, vorzugsweise mit einer mit der Netzfrequenz zusammenhängenden Taktung, besonders vorzugsweise mit einer Taktung von 100Bit/s, ausgebildet sind und/oder insbesondere wenn die den ED-Leitungen zugeordneten digitalen und/oder analogen Anschlüsse des Schnittstellengerätes jeweils wenigstens einen Triac, vorzugsweise einen mindestens einen Opto-Triac zur Steuerung der digitalen und/oder analogen Informationsübertragung aufweisen und/oder insbesondere wenn die der ED-Leitung zugeordneten digitalen Anschlüsse des Schnittstellengerätes Optokoppler zur galvanisch getrennten Taktgenerierung und/oder zur galvanisch getrennten Signalweiterleitung aufweist und/oder insbesondere wenn eine USART-Einheit die Optokoppler und den Opto-Triac mit der Kontrolleinheit des Schnittstellengerätes verbindet und/oder insbesondere wenn das Schnittstellengerät für die Übertragung der digitalen Informationen eine Funkübertragungseinheit umfasst und/oder insbesondere wenn für die Übertragung der digitalen Informationen eine Übertragungseinheit vorhanden ist, die die Daten mit Hilfe eines Modulationsverfahren über die Niederspannungsverkabelung überträgt und/oder insbesondere wenn das Schnittstellengerät über Eingänge zur Temperaturmessung und/oder Überwachung von Schaltzuständen der Elektrospeicherheizung, diese vorzugsweise als Optokoppler ausgeführt, verfügt und/oder insbesondere wenn das Schnittstellengerät optional über mindestens ein, vorzugsweise drei Schaltelemente verfügt, die zum Ein- und Ausschalten der Heizelemente der Elektrospeicherheizung verwendet werden und/oder insbesondere wenn die mehreren Schaltelemente nach Anspruch 24 auch einzeln schaltbar sind, um so eine feiner gestufte Leistungsaufnahme zu ermöglichen.

Insbesondere umfasst die Erfindung schließlich ein Verfahren zur Regelung von Elektrospeicherheizungen, insbesondere mit einem Regelungssystem und/oder einem Schnittstellengerät wie vorbezeichnet mit einem Zentralsteuergerät und einer Vielzahl von Elektrospeicherheizungen, wobei die Elektrospeicherheizungen jeweils wenigstens entweder einen analog steuerbaren oder einen manuellen Laderegler umfassen, bei dem den Elektrospeicherheizungen Schnittstellengeräte zugeordnet werden und die Laderegler und/oder Schalteinrichtungen mittels der Schnittstellengeräte mit wenigstens einem digitalen Anschluss des Zentralsteuergeräts verbunden werden, insbesondere wenn die digitalen Anschlüsse der Schnittstellengeräte und des Zentralsteuergeräts mit einem Kabelsystem und/oder kabellos verbunden werden und/oder insbesondere wenn Kleinspannungsleitungen und/oder ED-Leitungen des Kabelsystems und/oder Powerline für die digitale Datenübertragung genutzt werden und/oder insbesondere wenn eine Funkverbindung für die digitale Datenübertragung genutzt wird und/oder insbesondere wenn die Schnittstellengeräte Daten, insbesondere von heizungsnahen Temperaturen und/oder Raumtemperaturen und/oder Ladereglerzuständen und/oder Schaltzuständen von Bauteilen der Elektrospeicherheizungen, erfassen und insbesondere an das Zentralsteuergerät übertragen und/oder insbesondere wenn das Zentralsteuergerät die Daten ausgibt und/oder verarbeitet und/oder in Reaktionen auf die Daten der Schnittstellengeräte Befehle an die Schnittstellengeräte sendet und/oder insbesondere wenn mittels Temperaturfühlern in oder in der Nähe der Wärmespeicher Ist-Ladegrade der jeweiligen Elektrospeicherheizungen, insbesondere über automatisch ermittelte Temperatur-Ladegrad-Kurven, ermittelt werden und/oder insbesondere wenn mit Hilfe von separaten Temperaturfühlern Raumtemperaturen ermittelt werden und/oder insbesondere wenn die Leistungsaufnahme der Elektrospeicheröfen durch selektives Schalten der Heizelemente, vorzugsweise einzelner Phasen eines Drehstromanschlusses, moduliert wird und/oder insbesondere wenn alle Heizstäbe in regelmäßiger Reihenfolge nacheinander oder in Gruppen ein- und ausgeschaltet werden, um den Wärmespeicher des Elektrospeicherofens gleichmäßig zu erwärmen.

## Patentansprüche

1. Regelungssystem für Elektrospeicherheizungen, mit einem Zentralsteuergerät (1) und einer Vielzahl von Elektrospeicherheizungen (12), wobei die Elektrospeicherheizungen jeweils wenigstens einen analog steuerbaren (14) oder einem manuellen Laderegler umfassen,
**dadurch gekennzeichnet, dass**
den Elektrospeicherheizungen (12) zusätzlich Schnittstellengeräte (10) zugeordnet sind, das Zentralsteuergerät (1) und die Schnittstellengeräte (10) jeweils wenigstens einen digitalen Anschluss (1A, 10A) aufweisen, die digitalen Anschlüsse (1A, 10A) miteinander verbunden oder verbindbar sind und die Schnittstellengeräte (10) über mindestens je einen analogen Anschluss (10B) mit den analog (14B) steuerbaren Ladereglern (14) verbunden oder verbindbar sind und/oder über Schalteinrichtungen (10C) mit manuellen Ladereglern und darüber mit den Heizelementen der jeweiligen Elektrospeicherheizung (12) verbunden oder verbindbar sind.

2. Regelungssystem nach Anspruche 1, wobei die Schnittstellengeräte über mindestens ein, vorzugsweise drei Schaltelemente (10C) zum Ein- und Ausschalten der Heizelemente der jeweiligen Elektrospeicherheizung (12) verfügen.

3. Regelungssystem nach Anspruch 1 oder 2, wobei die Schnittstellengeräte die Elektrospeicherheizungen identifizierende digitale Adressen aufweisen.

4. Regelungssystem nach einem der Ansprüche 1 bis 3, wobei die Datenübertragung zwischen dem Zentralsteuergerät und den Schnittstellengeräten bidirektional ist.

5. Regelungssystem nach einem der Ansprüche 1 bis 4, wobei das Zentralsteuergerät einen Empfänger, für Wettervorhersagen, aufweist.

6. Schnittstellengerät für ein Regelungssystem für Elektrospeicherheizungen, insbesondere mit einem Regelungssystem nach einem der Ansprüche 1 bis 8, wobei das Regelungssystem ein Zentralsteuergerät (1) und eine Vielzahl von Elektrospeicherheizungen (12) aufweist, wobei die Elektrospeicherheizungen jeweils wenigstens einen analog steuerbaren oder mindestens einen manuellen Laderegler (14) umfassen,
**dadurch gekennzeichnet, dass**
das Schnittstellegerät (10) einen digitalen Anschluss (10A) als Ein- und Ausgang und eine digitale Adresse für Ansprechbarkeit durch das Zentralsteuergerät (1), eine Kontrolleinheit, wie eine Steuerung (10D), sowie wenigstens einen analogen Anschluss (10B) als Ausgang und/oder Schalteinrichtung (10C) aufweist und der wenigstens eine analoge Ausgang (10B) mit wenigstens einem der Laderegler (14) verbindbar ist und/oder die Schalteinrichtung mit dem manuellen Laderegler und darüber mit den Heizelementen der jeweiligen Elektrospeicherheizung (12) verbunden oder verbindbar ist.

7. Schnittstellengerät nach Anspruch 6, wobei das Schnittstellengerät und das Zentralsteuergerät mit Kleinspannungsleitungen und/oder wenigstens einer Einschaltdauer-Leitung und/oder mittels Powerline und/oder Funksignalen verbindbar sind.

8. Schnittstellengerät nach Anspruch 7, wobei die den Kleinspannungsleitungen zugeordneten digitalen Anschlüsse über eine USART-Einheit mit der Kontrolleinheit des Schnittstellengerätesverbindbar sind.

9. Schnittstellengerät nach einem der Ansprüche 7 bis 8, wobei die den Kleinspannungsleitungen zum Elektrospeicherheizungsregler zugeordneten analogen Anschlüsse des Schnittstellengerätes mit wenigstens einem D/A-Wandler und vorzugsweise mit zwei D/A-Wandlern verbindbar sind.

10. Schnittstellengerät nach Anspruch 7 oder 9, wobei die den Einschaltdauer-Leitungen zugeordneten digitalen und/oder analogen Anschlüsse des Schnittstellengerätes jeweils wenigstens einen Triac, vorzugsweise einen mindestens einen Opto-Triac zur Steuerung der digitalen und/oder analogen Informationsübertragung aufweisen.

11. Schnittstellengerät nach einem der Ansprüche 7 bis 10, wobei für die Übertragung der digitalen Informationen eine Übertragungseinheit vorhanden ist, die die Daten mit Hilfe eines Modulationsverfahrens über die Kleinspannungsleitungen überträgt.

12. Verfahren zur Regelung von Elektrospeicherheizungen, mit einem Regelungssystem und/oder einem Schnittstellengerät nach einem der vorhergehenden Ansprüche, mit einem Zentralsteuergerät und einer Vielzahl von Elektrospeicherheizungen, wobei die Elektrospeicherheizungen jeweils wenigstens entweder einen analog steuerbaren oder einen manuellen Laderegler umfassen,
**dadurch gekennzeichnet, dass**
den Elektrospeicherheizungen Schnittstellengeräte zugeordnet werden und die Laderegler und/oder Schalteinrichtungen mittels der Schnittstellengeräte mit wenigstens einem digitalen Anschluss des Zentralsteuergeräts verbunden werden.

13. Verfahren nach Anspruch 12, wobei die Schnittstellengeräte Daten, von heizungsnahen Temperaturen und/oder Raumtemperaturen und/oder Ladereglerzuständen und/oder Schaltzuständen von Bauteilen der Elektrospeicherheizungen, erfassen und an das Zentralsteuergerät übertragen.

14. Verfahren nach Anspruch 13, wobei das Zentralsteuergerät die Daten ausgibt und/oder verarbeitet und/oder in Reaktionen auf die Daten der Schnittstellengeräte Befehle an die Schnittstellengeräte sendet.

15. Verfahren nach einem der Ansprüche 12 bis 14, wobei mittels Temperaturfühlern in oder in der Nähe der Wärmespeicher Ist-Ladegrade der jeweiligen Elektrospeicherheizungen über automatisch ermittelte Temperatur-Ladegrad-Kurven ermittelt werden.

## Claims

1. A control system for electric storage heating devices, having a central control unit (1) and a multiplicity of electric storage heating devices (12), the electric storage heating devices in each case comprising at least one charge controller which can be controlled in an analogue manner (14) or a manual charge controller, **characterized in that**
interface devices (10) additionally being assigned to the electric storage heating devices (12), the central control unit (1) and the interface devices (10) in each case have at least one digital connection (1A, 10A), the digital connections (1A, 10A) are or can be connected to one another and the interface devices (10) are or can be connected via at least one analogue connection (10B) in each case to the charge controllers (14) which can be controlled in an analogue manner (14B) and/or via switching devices (10C) to manual charge controllers and are or can be connected thereby to the heating elements of the respective electric storage heating device (12).

2. The control system according to Claim 1, wherein the interface devices have at least one, preferably three switching elements (10C) for switching the heating elements of the respective electric storage heating device (12) on and off.

3. The control system according to Claim 1 or 2, wherein the interface devices have digital addresses identifying the electric storage heating devices.

4. The control system according to one of Claims 1 to 3, wherein the data transmission is bidirectional between the central control unit and the interface devices.

5. The control system according to one of Claims 1 to 4, wherein the central control unit has a receiver for weather forecasting.

6. An interface device for a control system for electric storage heating devices, particularly with a control system according to one of Claims 1 to 8, wherein the control system has a central control unit (1) and a multiplicity of electric storage heating devices (12), wherein the electric storage heating devices in each case comprise a charge controller, which can be controlled in an analogue manner, or at least one manual charge controller (14),
**characterized in that**
the interface device (10) has a digital connection (10A) as in- and output and a digital address for addressability by the central control unit (1), a control unit, such as a control (10D), and also at least one analogue connection (10B) as output and/or switching device (10C) and the at least one analogue output (10B) can be connected to at least one of the charge controllers (14) and/or the switching device is or can be connected thereby to the heating elements of the respective electric storage heating device (12).

7. The interface device according to Claim 6, wherein the interface device and the central control unit can be connected using extra low voltage lines and/or at least one duty cycle line and/or by means of Powerline and/or radio signals.

8. The interface device according to Claim 7, wherein the digital connections assigned to the extra low voltage lines can be connected to the control unit of the interface device via a USART unit.

9. The interface device according to one of Claims 7 to 8, wherein the analogue connections of the interface device assigned to the extra low voltage lines for the electric storage heating device controller can be connected to at least one D/A converter and preferably to two D/A converters.

10. The interface device according to Claim 7 or 9, wherein the digital and/or analogue connections of the interface device assigned to the duty cycle lines in each case have at least one triac, preferably at least one opto triac for controlling the digital and/or analogue information transmission.

11. The interface device according to one of Claims 7 to 10, wherein a transmission unit is present for transmitting the digital information, which transmits the data via the extra low voltage lines with the aid of a modulation method.

12. A method for controlling electric storage heating devices, having a control system and/or an interface device according to one of the preceding claims, having a central control unit and a multiplicity of electric storage heating devices, wherein the electric storage heating devices in each case comprise at least either a charge controller which can be controlled in an analogue manner or a manual charge controller,
**characterized in that**
interface devices are assigned to the electric storage heating devices and the charge controllers and/or switching devices are connected by means of the interface devices to at least one digital connection of the central control unit.

13. The method according to Claim 12, wherein the interface devices record data about close-to-heating temperatures and/or room temperatures and/or charge controller states and/or switching states of components of the electric storage heating devices and transmit the data to the central control unit.

14. The method according to Claim 13, wherein the central control unit outputs and/or processes the data and/or in reaction to the data of the interface devices, sends commands to the interface devices.

15. The method according to one of Claims 12 to 14, wherein actual states of charge of the respective electric storage heating devices are determined by means of temperature sensors in or in the vicinity of the heat accumulators via automatically determined temperature/state-of-charge curves.

## Revendications

1. Système de commande de radiateurs électriques à accumulation, comportant une unité de commande centrale (1) et une pluralité de radiateurs électriques à accumulation (12), dans lequel les radiateurs électriques à accumulation comprennent chacun au moins un contrôleur analogique (14) ou un régulateur de charge manuel,
**caractérisé en ce que**
des dispositifs d'interface supplémentaires (10) sont affectés aux radiateurs électriques à accumulation (12), le dispositif de commande central (1) et les dispositifs d'interface (10) présentent chacun au moins une connexion numérique (1A, 1OA), les connexions numériques (1A, 10A) sont connectées ou connectables entre elles et les dispositifs d'interface (10) sont connectés ou connectables via au moins une connexion analogique (10B) aux régulateurs de charge (14) qui peuvent être commandés de manière analogique (14B) et/ou sont connectés ou connectables via des dispositifs de commutation (10C) aux régulateurs de charge manuels et surtout aux éléments chauffants du chauffe-eau électrique respectif (12).

2. Système de commande selon la revendication 1, dans lequel les dispositifs d'interface ont au moins un, de préférence trois éléments de commutation (10C) pour allumer et éteindre les éléments chauffants du chauffage électrique à accumulation (12) respectif.

3. Système de commande selon la revendication 1 ou 2, dans lequel les dispositifs d'interface ont des adresses numériques identifiant les radiateurs à accumulation électriques.

4. Système de commande selon une des revendications 1 à 3, dans lequel la transmission de données entre le dispositif de commande central et les dispositifs d'interface est bidirectionnelle.

5. Système de commande selon une des revendications 1 à 4, dans lequel l'unité centrale de commande dispose d'un récepteur pour les prévisions météorologiques.

6. Dispositif d'interface pour un système de commande de radiateurs électriques à accumulation, en particulier comportant un système de commande selon une des revendications 1 à 8, dans lequel le système de commande comprend un dispositif de commande central (1) et une pluralité de radiateurs électriques à accumulation (12), dans lequel les radiateurs électriques à accumulation comprennent chacun au moins un régulateur de charge pouvant être commandé de manière analogique ou manuelle (14),
**caractérisé en ce que**
le dispositif d'interface (10) présente une connexion numérique (10A) en entrée et en sortie et une adresse numérique pour la réactivité par le dispositif de commande central (1), une unité de commande, telle qu'un contrôleur (10D), et au moins une connexion analogique (10B) en tant que dispositif de sortie et/ou de commutation (10C) et la au moins une sortie analogique (10B) peut être connectée à au moins un des régulateurs de charge (14) et/ou le dispositif de commutation 20 est connecté ou connectable avec le régulateur de charge manuel et donc aux éléments chauffants du chauffe-eau électrique respectif (12).

7. Dispositif d'interface selon la revendication 6, dans lequel le dispositif d'interface et le dispositif de commande central peuvent être connectés à des lignes à très basse tension et/ou au moins une ligne de rapport cyclique et/ou au moyen de lignes électriques et/ou de signaux radio.

8. Dispositif d'interface selon la revendication 7, dans lequel les connexions numériques affectées aux lignes basse tension peuvent être connectées via une unité USART à l'unité de commande du périphérique d'interface.

9. Dispositif d'interface selon une des revendications 7 à 8, dans lequel les connexions analogiques du dispositif d'interface affectées aux lignes à très basse tension du régulateur de chauffage à accumulation électrique peuvent être connectées avec au moins un convertisseur D/A et de préférence avec deux convertisseurs D/A.

10. Dispositif d'interface selon la revendication 7 ou 9, dans lequel les connexions numériques et/ou analogiques du dispositif d'interface affectées aux lignes de rapport cyclique présnetent chacune au moins un triac, de préférence au moins un opto-triac pour contrôler la transmission d'informations numérique et / ou analogique.

11. Dispositif d'interface selon une des revendications 7 à 10, dans lequel en vue de la transmission des informations numériques, une unité de transmission est présente, qui transmet les données sur les lignes à très basse tension en utilisant un procédé de modulation.

12. Procédé de commande de radiateurs électriques à accumulation, avec un système de commande et/ou un dispositif d'interface selon une des revendications précédentes, comportant un dispositif de commande central et une pluralité de radiateurs électriques à accumulation, dans lequel les radiateurs électriques à accumulation comprennent chacun au moins un régulateur de charge commandable soit de manière analogique, soit manuelle ,
**caractérisé en ce que**
les accumulateurs électriques sont affectés aux dispositifs d'interface et les régulateurs de charge et/ou les dispositifs de commutation sont connectés à au moins une connexion numérique du dispositif de commande central au moyen des dispositifs d'interface.

13. Procédé selon la revendication 12, dans lequel les dispositifs d'interface acquièrent des données, d'après des températures liées au chauffage et/ou des températures ambiantes et/ou des états du régulateur de charge et/ou des états de commutation des composants des radiateurs à accumulation électriques, et les transmettent au dispositif de commande central.

14. Procédé selon la revendication 13, dans lequel le dispositif de commande central émet et/ou traite les données et/ou envoie des commandes aux dispositifs d'interface en réponse aux données des dispositifs d'interface.

15. Procédé selon une quelconque des revendications 12 à 14, dans lequel en utilisant des capteurs de température dans ou à proximité de l'accumulateur de chaleur, les niveaux de charge réels des chauffages électriques à accumulation respectifs peuvent être déterminés en utilisant des niveaux de charge de température déterminés automatiquement.
